# EUROPEAN PATENT APPLICATION

(11) **EP 2 819 102 A1**
(43) Date of publication of application: **31.12.2014**
(21) Application number: 13173662.1
(22) Date of filing: 25.06.2013
(51) Int. Cl.: G07C 5/00, B60R 25/04, G06Q 50/30

(54) **A system for administrating and monitoring vehicle-related data for a plurality of remote vehicles**

(71) Applicant: Castle, Craig, Co. Cork (IE)
(72) Inventor: Castle, Craig, Co. Cork (IE)
(74) Representative: O'Connor, Michael Donal

(57) **Abstract**

This invention relates to a system (1) for administrating and monitoring vehicle-related data for a plurality of remote vehicles (11), the vehicle-related data including one or more of the vehicle's tax, insurance or roadworthiness certificate expiry date. The system comprises a central server (3) in communication with a plurality of remote devices (9) mounted in remote vehicles. The central server (3) has an accessible memory (5) and a communications module (7). The remote devices (9) each have a memory (33, 35), a communications module (37), a motion sensor (39) for detecting movement of the vehicle and a processor (41). The processor (41) runs computer program code operable to cause the communications module (37) to transmit a notification to the central server (3) on one of the tax, insurance or roadworthiness certificate expiry dates having elapsed and the motion sensor (39) having detected movement of the vehicle. An alert can then be sent to the relevant personnel to catch the motorist driving the vehicle (11) in question with reports generated as evidence where required.

## Description

### Introduction

This invention relates to a system for administrating and monitoring vehicle-related data for a plurality of remote vehicles.

In many countries, there is a legal requirement for vehicle owners and vehicle operators to maintain insurance in case of accident and/or pay an excise duty charge (commonly referred to as vehicle tax or motor tax) for using or keeping a motor vehicle on any public highway. In some jurisdictions, there is a legal requirement for the vehicles to undergo roadworthiness checks at set times to verify that the vehicle is not a danger to the driver or to other motorists. As evidence of their insurance cover, the excise duty having been paid and of having had the necessary inspections carried out on their vehicle (where applicable), motorists may display one or more paper discs on their windscreen, depending on the country of registration. When a vehicle is in a road traffic accident or is stopped by the authorities for random checks, these paper discs are often checked as evidence that the motorist and the vehicle have the necessary insurance, have paid the correct excise duty applicable to the vehicle's taxation class and have had the roadworthiness checks carried out on the vehicle as required by local law. If it is found that the motorist or the vehicle has not been properly insured, that the excise duty has not been paid as required by law or that the vehicle has not been certified as roadworthy, the driver may be prosecuted.

Despite the legal requirements, there are many motorists that do not obtain the necessary insurance, pay the excise duties due or see to it that the car has been certified roadworthy. This represents a significant problem for Governments and local authorities as they attempt to provide services for all motorists with less resources. It also represents a significant problem for the other road users as one factor blamed for the high cost of insurance premia is the need to contribute a portion of the insured drivers' premia fees towards an uninsured driver's fund to cover the cost of compensation claims where an uninsured driver is involved in a road traffic accident.

In order to catch motorists that fail to comply with the particular jurisdiction's legal requirements, the authorities have been known to carry out random spot checks where they intercept and check passing vehicles for compliance with local legal requirements.

Despite the penalties for being caught driving a vehicle without the necessary legal requirements having been satisfied, there are many motorists that do not pay for these commodities and still drive their vehicles. The chance of being detected by the authorities is often considered to be relatively low and many motorists still take a chance on not being caught. Furthermore, in light of the fact that the current discs required to be displayed as evidence of the legal requirements having been met are made from paper, they are often relatively simple to forge and it is relatively common for counterfeit discs to be produced and displayed. Such forgeries may be sufficiently realistic that they are able to pass a cursory inspection by a police officer. In addition to the above, such a paper disc is not updateable and could still display a valid date despite criteria for the specific legal requirement no longer being valid. In some surveys, it has been reported that up to 15% of all road users are driving without insurance. This represents a massive loss to insurance firms and causes considerable rises in insurance premia. The loss of revenue to the exchequer from excise duty avoidance is also reported to be significant in some countries. There is a desire to curb this fraudulent activity.

It is known to provide computerised databases with information relating to one or more vehicles. For example, many police forces around the world maintain databases with information relating to intelligence, criminal activity or warrants specific to a vehicle or it's registered owner. These are known as markers. Vehicle excise duty offices maintain databases with information relating to vehicles' current excise duty status. Insurance companies maintain databases with information relating to their customers insurance policies and vehicle testing bodies are known to keep records of vehicles that are required to have periodic roadworthiness checks and their status in this regard. However, these databases are bespoke systems that are not currently networked in many countries.

It is an object of the present invention to provide a system for administrating and monitoring vehicle-related data for a plurality of remote vehicles that overcomes at least some of the problems with the known systems.

### Statements of Invention

According to the invention there is provided a system for administrating and monitoring vehicle-related data for a plurality of remote vehicles, the vehicle-related data including one or more of the vehicle tax expiry date, the vehicle insurance expiry date and the vehicle roadworthiness certificate expiry date, the system comprising:
a central server having:
   an accessible memory with vehicle-related data relating to each of the plurality of vehicles stored thereon; and
   a two-way communications module for communication to and from any of a plurality of remote vehicle-specific devices; and
a plurality of remote vehicle-specific devices each of which is mounted in one of the plurality of remote vehicles, the devices each having:
   a memory with vehicle-related data particular to their vehicle stored thereon, the vehicle-related data including one or more of the vehicle tax expiry date, the vehicle insurance expiry date and the vehicle roadworthiness certificate expiry date;
   a two way communications module for communication to and from the central server;
   a motion sensor for detecting movement of the vehicle in which the motion sensor is mounted; and
   a processor, the processor running computer program code operable to cause the communications module to transmit a notification to the central server on one of the vehicle tax expiry date, the vehicle insurance expiry date and the vehicle roadworthiness certificate expiry date having elapsed and the motion sensor having detected movement of the vehicle.

By having such a system, it will be possible to detect when a vehicle that is not properly insured, taxed or deemed roadworthy is in use. Therefore, the appropriate authorities can be alerted to the fact that a particular vehicle is being used unlawfully. The opportunity to catch individuals that fail to pay their insurance, or tax their vehicle or get it passed roadworthy is significantly increased. Furthermore, this information that a particular vehicle has been in transit can be presented as evidence of vehicle usage to any legal body or to the authorities as may be required.

There are several advantages to replacing the paper discs with an electronic vehicle-specific device. First of all, the electronic device will be more complex to copy and the possibility of counterfeit products being produced is reduced. Secondly, the data on the device can be checked by an approved authority using a unique serial number or other identifier printed on the device. Using a suitably secure web interface, an authorized individual can check the relevant information for that particular device by entering the unique serial number into a web interface that links to the central server. This will provide a better indicator to the relevant authorities as to whether or not all requirements of local laws have been satisfied and will quickly demonstrate whether or not the vehicle-specific device is the device for the vehicle it is contained within. Thirdly, by having an electronic device that is able to communicate to and from a central server, the vehicle-specific data stored on the electronic device can be updated remotely from data in the central server. For example, as the motorist pays their road tax, the record in the central server can be updated that the expiry date of the road tax has been put back to a future date and this information can be pushed out to the vehicle-specific device and stored in its memory. This will obviate the need for paper discs to be displayed on the vehicle that would otherwise have to be replaced on a regular basis in some instances, and is believed to be more environmentally friendly and more cost effective to manage over time.

In one embodiment of the invention there is provided a system in which the central server has a first web interface to allow third parties to access the central server. It is envisaged that it may be desirable to allow third parties read only access to the accessible memory/database. For example, it may be in the interest of a purchaser to determine whether or not the tax is up to date or whether the roadworthiness certificate is current and this can be checked via the web interface.

In one embodiment of the invention there is provided a system in which the central server has a second web interface to allow authorized third parties to update the central server. It is further envisaged that it may be preferable to allow some authorized individuals to update the information in the accessible memory/database. Indeed, they may be able to update a subset of the total number of fields in the accessible memory. The central server will obtain updated records when available from existing databases in relation to insurance, ownership details, tax duty and roadworthiness. While these may be updated centrally by authorised third parties the ability to update the central database with data from existing databases is also possible.

In one embodiment of the invention there is provided a system in which the vehicle-specific devices each have a GPS tracking device to determine the location of the vehicle-specific device. This is seen as particularly preferred as the GPS tracking will facilitate location of the vehicle if in transit and secondly will provide evidence of the route taken by the vehicle along with time and date stamps. The central server has the ability to produce such information as a report for evidential basis as may be required.

In one embodiment of the invention there is provided a system in which the motion sensor comprises an accelerometer. An accelerometer will allow the device to determine whether or not it is moving and if so, in which direction. This is a simple and relatively inexpensive electronic component to use.

In one embodiment of the invention there is provided a system in which the vehicle-specific device's communications module comprises a GSM modem. This is seen as a particularly suitable module for communications as it is bandwidth and cost efficient as well as reliable to use.

In one embodiment of the invention there is provided a system in which the GSM modem is equipped to communicate data over one of the EDGE protocol and the GPRS protocol. These protocols are seen as particularly preferred as they will require less bandwidth and will operate in poorer coverage areas.

In one embodiment of the invention there is provided a system in which the GSM modem is equipped to communicate data over a 3G protocol.

In one embodiment of the invention there is provided a system in which the central server has a remote server interface to permit reception of vehicle-related data for subsequent storage in accessible memory through the server interface. By having a remote server interface, the data in the central server's accessible memory can be updated automatically without requiring manual data entry multiple times. For example, the records of the taxation office that are updated can be batch uploaded to the accessible memory.

In one embodiment of the invention there is provided a system in which the vehicle-specific device is provided in a sealed tamper proof casing. By having the device in a tamper proof casing, if an unscrupulous individual should try to create fraudulent copies or modify the information stored in memory on the device, the device will effectively be destroyed as they attempt to access the interior of the device.

In one embodiment of the invention there is provided a system in which the vehicle-specific device is provided with means to attach the device to the windscreen of the vehicle.

In one embodiment of the invention there is provided a system in which the vehicle-specific devices memory is a solid state disk. The solid state disk is seen as particularly useful as it will provide persistent storage of data, fast read and write times, longer life compared to other traditional hard disks, low noise while in opperation and will allow the device to be operated in a "sleep mode" thereby conserving battery power and prolonging battery life.

In one embodiment of the invention there is provided a system in which the vehicle-specific devices are provided with a rechargeable battery and a solar array coupled to the rechargeable battery.

In one embodiment of the invention there is provided a vehicle-specific device for mounting in a vehicle, the device having:
a memory with vehicle-related data particular to their vehicle stored thereon, the vehicle-related data including one or more of the vehicle tax expiry date, the vehicle insurance expiry date and the vehicle roadworthiness certificate expiry date;
a two way communications module for communication to and from a remote central server;
a motion sensor for detecting movement of the vehicle in which the motion sensor is mounted; and
a processor, the processor running computer program code operable to cause the communications module to transmit a notification to the remote central server on one of the vehicle tax expiry date, the vehicle insurance expiry date and the vehicle roadworthiness certificate expiry date having elapsed and the motion sensor having detected movement of the vehicle.

### Detailed Description of the Invention

The invention will now be more clearly understood from the following description of some embodiments thereof given by way of example only with reference to the accompanying drawings, in which:-
Figure 1 is diagrammatic representation of a system according to the invention;
Figure 2 is a diagrammatic representation of the vehicle-specific device mounted in a car windscreen; and
Figure 3 is a diagrammatic representation of a vehicle-specific device and the main components thereof.

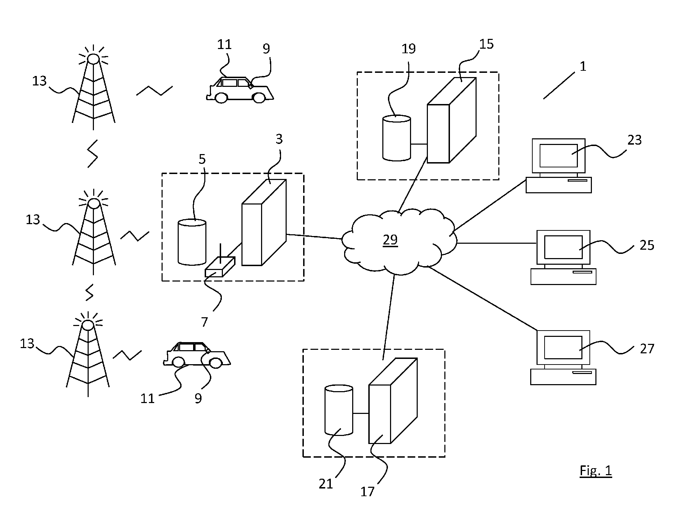

Referring to Figure 1, there is shown a system for administrating vehicle-related data for a plurality of remote vehicles, indicated generally by the reference numeral 1, comprising a central server 3 having an accessible memory 5 and a communications module 7. The system further comprises a plurality of remote vehicle specific devices 9 each of which is mounted in a vehicle 11. For reasons of simplicity, only two vehicles 11 with vehicle specific devices 9 have been shown however it will be understood that the present invention can be used to monitor thousands of vehicles at a time. The vehicle specific devices 9 each comprise a memory with vehicle-related data particular to their vehicle 11 stored thereon, a communications module for communication with the central server 3, a motion sensor for detecting movement of the vehicle 11 in which the motion sensor is mounted, and a processor. The vehicle-related data includes one or more of the vehicle tax expiry date, the vehicle insurance expiry date and the vehicle roadworthiness certificate expiry date. The processor runs computer program code that is operable to cause the communications module to transmit a notification to the central server 3 on one of the vehicle tax expiry date, the vehicle insurance expiry date and the vehicle roadworthiness certificate expiry date having elapsed and the motion sensor having detected movement of the vehicle 11.

The communications module 7 communicates with the communications module of the remote vehicle-specific device over a mobile telephony network. In the present example, the communications modules of the remote vehicle-specific devices communicate over EDGE or GPRS protocol with the communication module 7. A number of telecommunications masts 13 are provided in Figure 1 to illustrate this aspect of the invention. In addition to the foregoing, the system further comprises a pair of external servers 15, 17, each of which has its own accessible memory 19, 21 respectively, and a plurality of computers 23, 25, 27. The external servers 15, 17 and the personal computers 23, 25 and 27 are all connected to the internet 29. The central server 3 has a pair of web interfaces, the first of which allows access to the information stored in accessible memory 5 to the users of the personal computers 23, 25, 27 via the internet 29. The second web interface allows access to the external servers 15, 17 to update the central server's accessible database 5 or retrieve data automatically from the central server's accessible memory 5.

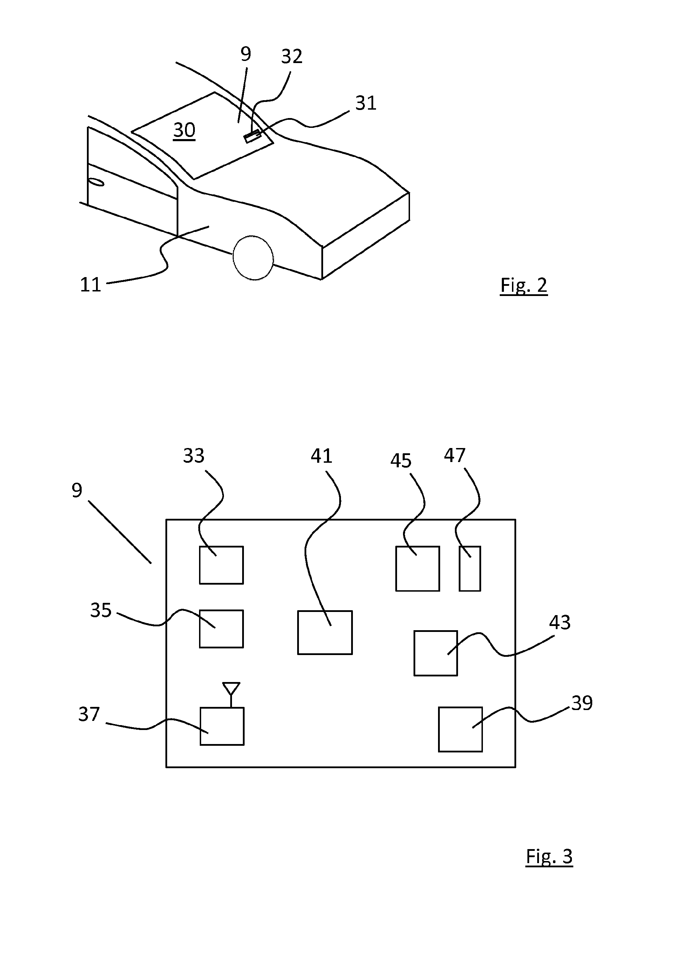

Referring to Figure 2, there is shown a diagrammatic representation of the vehicle-specific device 9 mounted in a car 11 inside it's windscreen 30. Preferably, the device will have suction cups or one or more adhesive pads to hold the vehicle-specific device in position relative to the windscreen. The device comprises a tamper proof casing 31 with a solar array 32 at the top of the casing for use in recharging a battery (not shown) in the device 9.

Referring to Figure 3, there is shown a diagrammatic representation of a vehicle-specific device 9 and the main components thereof. The vehicle-specific device for mounting in a vehicle, the device having a memory 33 with vehicle-related data particular to their vehicle stored thereon, the vehicle-related data including one or more of the vehicle tax expiry date, the vehicle insurance expiry date and the vehicle roadworthiness certificate expiry date. The memory comprises a solid state disk. There is further provided some random access memory (RAM) 35. The device includes a communications module 37, in this case a Global System for Mobile Communications (GSM) modem, for communication with the remote central server 3, a motion sensor 39, in this case an accelerometer, for detecting movement of the vehicle in which the motion sensor is mounted and a processor 41.

The processor 41 runs computer program code operable to cause the communications module 37 to transmit a notification to the remote central server 3 on one of the vehicle tax expiry date, the vehicle insurance expiry date and the vehicle roadworthiness certificate expiry date having elapsed and the motion sensor 39 having detected movement of the vehicle 11. There is further provided a Global Positioning System (GPS) 43 to allow tracking of the whereabouts of the device 9 and by extension the vehicle 11. The device 9 is powered by a battery 45, in this case a rechargeable lithium ion battery, which is connected to a battery charging circuit 47, which in turn is connected to the solar array (not shown) on the exterior of the devices casing.

Various other components could readily be provided. For example, a second rechargeable battery (not shown) will preferably be provided as a back-up supply. A heat sink may be necessary for the processor and various light emitting diodes (LEDs) may be provided to visually indicate device status. The device may be equipped for Bluetooth, RFID, Zigbee or other communications when interrogated by a reader device. Preferably, the device will be provided with a sacrificial input/output (I/O) connector that will fracture on the casing being taken apart. This can be used as a trigger signal for the communications module 37 to transmit a tamper warning to the central server 3. The casing will preferably be provided with a unique identification number on the exterior of the casing which may be used in identification or updating operations.

In use, the device 9 is able to communicate with the central server 3. The insurance, tax and road worthiness information may be stored in the accessible memory 5 of the central server 3 and other or additional information may also be stored in the accessible memory, such as, but not limited to, the owner's identification details, the vehicle make, the vehicle model, the vehicle's registration, the year of vehicle manufacture, the vehicle colour, the vehicle engine size, the insurance policy holder's name, the named driver's on that policy, the driver's history(ies), the driver's qualifications, any penalty points or endorsements on the driver's licence and the like. At least some of this data stored in the accessible memory 5 is downloaded to the memory on the 33 on the vehicle specific device 9. Accordingly, the device 9 will have a record of when, for example, the tax or insurance policy covering the car will expire.

The device 9 has an internal calendar and it stores the relevant information in the internal calendar where it can thereafter compare the current date to the date of expiry of the insurance policy, taxation certificate or certificate of roadworthiness. In many ways, these can be seen as diary dates in an electronic calendar. The device 9 can therefore tell whether or not the insurance and the like are out of date. The device is in a low power sleep mode for much of the time while the vehicle is at rest. However, when the vehicle 11 moves, the accelerometer 39 will detect movement of the car and will wake up the processor 41 and other components 33, 35, 37 and 43. This may be a gradual process and it may require a prolonged period of motion being detected in order to wake up all of the other components.

Once awake, the processor 41 will determine if there are any updates to the vehicle specific data stored in memory 33 contained in the accessible memory 5. This will be done by sending an update request to the central server. If there is an update, those updates will be sent from the central server 3 to the device 9 and used to overwrite the old data in memory 33. The processor 41 will then determine if there are any exception events, or more specifically, is the vehicle moving at a time where the vehicle is not covered with valid insurance, tax or certificate of roadworthiness. If an exception event is detected, a notification that the vehicle is in transit and that it is not in compliance with the law will be sent to the central server. This notification can in turn be relayed to a responsible party such as the police or the tax commissioners so that appropriate corrective action can be taken. If the GPS unit is provided, a record of the speed of travel, the location of the device and or the final resting place of the vehicle can be transmitted to the central server so that the motorist can be apprehended by the police and caught in the act.

It will be understood from the foregoing that the information in the device is derived from information contained in the central server's 3 accessible memory 5. This information can be updated by authorized individuals. For example, the members of the motor tax office may be allowed to access all, or more likely only certain parts, of the individual records in accessible memory 5. For example, the members of the motor tax office may be able to access those fields of the record that relate to motor tax and if they determine that the motor tax for a particular vehicle has been paid for another year, they can access the record in accessible memory 5 that corresponds to the device 9 that in turn corresponds to the car 11 in question and the record can be updated by moving the tax expiry date backwards. This information is then either retrieved by the device 9 as an update or is pushed to the device by the central server. Similarly, the records can be updated in bulk by performing an automatic update operation from another server. The information in the records in accessible memory can be viewed by other individuals using personal computers 23, 25, 27 and these individuals may (for example the car's owner) have the ability to change some of the fields in the record in accessible memory 5. The users may be provided with passwords and user names to access their account details.

It is envisaged that the memory used will be, for the most part, SSD memory however other memory could be used also. The memory required is finite if all that is required is to record and log exception events and the device may operate a first in, first out (FIFO) type arrangement in which exception events only are recorded and if a download to the central server has not been possible, the oldest data will be overwritten. Various other modifications can be made to the embodiment hereinbefore without departing from the spirit of the invention. What is important is that there is an electronic device with one or more relevant pieces of data stored thereon that may be monitored and if the car is being driven illegally or without certain requirements having been met, the central server is alerted and appropriate action can be taken.

It is envisaged that the data on and relevant to the vehicle-specific devices may be accessed in one or more disparate ways. For example, in the embodiment shown, a unique identification number is provided on each of the vehicle-specific devices. This identification number can be inserted into a user interface of a computing device that is able to access a web interface of the central server. The computing device could be a handheld device such as a mobile telephone, a smartphone, a PDA, a tablet, a so-called phablet or other computing device such as a laptop, a personal computer or a bespoke computing system provided in police vehicles. The data can then be displayed on the user interface of the computing device for review. Alternatively, the data on the vehicle specific device could be accessed and retrieved by an appropriate hand-held "reader" computing device that is able to communicate with the vehicle-specific device and access the information thereon for subsequent display on the "reader". If a "reader" is provided to access the data, it is envisaged that the data will be encrypted to only allow access and retrieval by a genuine "reader".

In this specification the terms "comprise, comprises, comprised and comprising" and the terms "include, includes, included and including" are all deemed totally interchangeable and should be afforded the widest possible interpretation.

The invention is in no way limited to the embodiments herein before described and may be varied in both construction and detail within the scope of the claims.

## Claims

1. A system (1) for administrating and monitoring vehicle-related data for a plurality of remote vehicles (11), the vehicle-related data including one or more of the vehicle tax expiry date, the vehicle insurance expiry date and the vehicle roadworthiness certificate expiry date, the system comprising:
a central server (3) having:
an accessible memory (5) with vehicle-related data relating to each of the plurality of vehicles stored thereon; and
a two way communications module (7) for communication to and from any of a plurality of remote vehicle-specific devices; and
a plurality of remote vehicle-specific devices (9) each of which is mounted in one of the plurality of remote vehicles (11), the devices each having:
a memory (33) with vehicle-related data particular to their vehicle stored thereon, the vehicle-related data including one or more of the vehicle tax expiry date, the vehicle insurance expiry date and the vehicle roadworthiness certificate expiry date;
a two way communications module (37) for communication to and from the central server;
a motion sensor (39) for detecting movement of the vehicle in which the motion sensor is mounted; and
a processor (41), the processor running computer program code operable to cause the communications module to transmit a notification to the central server on one of the vehicle tax expiry date, the vehicle insurance expiry date and the vehicle roadworthiness certificate expiry date having elapsed and the motion sensor (39) having detected movement of the vehicle (11).

2. A system (1) as claimed in claim 1 in which the central server (3) has a first web interface to allow third parties to access the central server.

3. A system (1) as claimed in claim 1 or 2 in which the central server (3) has a second web interface to allow authorised third parties to update the central server.

4. A system (1) as claimed in any preceding claim in which the vehicle-specific devices (9) each have a GPS tracking device (43) to determine the location of the vehicle-specific device.

5. A system (1) as claimed in any preceding claim in which the motion sensor (39) comprises an accelerometer.

6. A system (1) as claimed in any preceding claim in which the vehicle-specific device's communications module (37) comprises a GSM modem.

7. A system (1) as claimed in claim 6 in which the GSM modem is equipped to communicate data over one the EDGE protocol and the GPRS protocol.

8. A system (1) as claimed in claim 6 or 7 in which the GSM modem is equipped to communicate data over a 3G protocol.

9. A system (1) as claimed in any preceding claim in which the central server (3) has a remote server interface to permit reception of vehicle-related data for subsequent storage in accessible memory through the server interface.

10. A system (1) as claimed in any preceding claim in which the vehicle-specific device (9) is provided in a sealed tamper proof casing (31).

11. A system (1) as claimed in any preceding claim in which the vehicle-specific device (9) is provided with means to attach the device to the windscreen (30) of the vehicle.

12. A system (1) as claimed in any preceding claim in which the vehicle specific devices memory (33) is a solid state disk.

13. A system(1) as claimed in any preceding claim in which the vehicle specific devices (9) are provided with a rechargeable battery (45) and a solar array (32) coupled to the rechargeable battery.

14. A vehicle-specific device (9) for mounting in a vehicle, the device having:
a memory (33) with vehicle-related data particular to their vehicle stored thereon, the vehicle-related data including one or more of the vehicle tax expiry date, the vehicle insurance expiry date and the vehicle roadworthiness certificate expiry date;
a two way communications module (37) for communication to and from a remote central server;
a motion sensor (39) for detecting movement of the vehicle in which the motion sensor is mounted; and
a processor (41), the processor running computer program code operable to cause the communications module (37) to transmit a notification to the remote central server (3) on one of the vehicle tax expiry date, the vehicle insurance expiry date and the vehicle roadworthiness certificate expiry date having elapsed and the motion sensor (39) having detected movement of the vehicle.
